# EUROPÄISCHE PATENTSCHRIFT

(11) **EP 2 368 819 B1**
(45) Veröffentlichungstag und Bekanntmachung des Hinweises auf die Patenterteilung: **16.04.2014**
(21) Anmeldenummer: 11150795.0
(22) Anmeldetag: 13.01.2011
(51) Int. Cl.: B65G 47/92, B65G 47/90, B65H 5/14

(54) **Materialbahngreifer und Verfahren zum Handhaben von Materialbahnen**
Sheet material gripper and method for handling the sheet material
Préhenseur pour matériau en bande et procédé de manipulation de matériau en bande

(30) Priorität: 22.03.2010 DE 102010011972
(43) Veröffentlichungstag der Anmeldung: 28.09.2011
(73) Patentinhaber: Benteler SGL GmbH & Co. KG, 33102 Paderborn (DE)
(72) Erfinder: Benteler, Caspar, 33014, Bad Driburg (DE); Müller, Ulrich, 86462, Langweid am Lech (DE)
(74) Vertreter: Ksoll, Peter

(56) Entgegenhaltungen:
- EP-A2- 1 757 547
- WO-A1-00/45977

## Beschreibung

Die vorliegende Erfindung betrifft eine Vorrichtung zum Greifen von flächigen Materialbahnen gemäß dem Oberbegriff von Patentanspruch 1.

Die vorliegende Erfindung betrifft weiterhin ein Verfahren zum Handhaben von Materialbahnen gemäß dem Oberbegriff von Patentanspruch 12.

Die Anwendung mechanisierter oder automatisierter Fertigungslinien bedingt vielfach den Transport verschiedener Typen von aufeinander gestapelten flachen Gegenständen. Aus dem Stand der Technik sind zur Aufnahme dieser flach aufeinander gestapelten Gegenstände, meist Materialbahnen, verschiedene Greifertypen bekannt.

Beispielsweise ist ein Vakuumgreifer bekannt, der mit Unterdrucksaugplatten und mit Unterdrucknäpfen ausgestattet ist. Für den Transport der Materialbahn wird der Greifer über den Stapel gefahren und auf den zuoberst liegenden Gegenstand gedrückt. Ein Unterdruck wird zwischen dem aufzunehmenden Gegenstand und der Unterdrucksaugplatte erzeugt, der Gegenstand von dem Stapel abgehoben und zu einem weiteren Verarbeitungspunkt verfahren. Unzweckmäßig ist dieser Greifertyp bei dem Greifen und Anheben von mehreren übereinander gestapelten Materialbahnen. Auch hat der Vakuumgreifer einen Nachteil bei porösen Materialbahnen, beispielsweise bei Geflechtbahnen.

Ein weiterer Greifertyp ist aus dem Stand der Technik als Nadelgreifer bekannt. Der Nadelgreifer greift mit einem nadelförmigen Fortsatz und nimmt die Materialbahn dadurch auf. Meist erfolgt dies in einem Randbereich der Materialbahn. Auch der Nadelgreifer ist in der Aufnahmefähigkeit von mehreren übereinander gestapelten Bahnen beschränkt. Weiterhin kann die Materialbahn im randseitigen Bereich durch den Nadelgreifer ausfransen. Mindestens aber entsteht ein Loch im Eingriffspunkt des nadelartigen Fortsatzes.

Ein weiterer aus dem Stand der Technik bekannter Greifertyp ist ein sogenannter Gefriergreifer. Der Gefriergreifer greift das aufzuhebende Material durch Anfrieren. Unzweckmäßig bei dieser Greifart ist, dass der Greifer die Materialbahn selbst kühlt. Auch ist ein solcher Greifertyp nicht im Einsatz von mit Bindemittel getränkten Materialbahnen anwendbar.

Auch sind mechanische Greifer aus dem Stand der Technik bekannt, beispielsweise durch die gattungsgemäße Anordnung der EP 1 757 547 A2 oder aber die WO 00/45977 A. Hierbei weist ein Greifer eine Zangenmaulgeometrie auf, die geschlossen wird und eine in der Zange befindliche Greifbahn dann beispielsweise im Falle der erstbenannten Druckschrift über einen Elektromagneten fixiert hält.

Aufgabe der vorliegenden Erfindung ist es daher einen Greifertyp zur Verfügung zu stellen, mit dem es möglich ist, verschiedene Werkstoffarten von Materialbahnen zu greifen, bei gleichzeitiger Möglichkeit mehrere Materialbahnlagen mit einem Greifschritt aufzunehmen. Aufgabe der vorliegenden Erfindung ist es weiterhin, ein Verfahren zur Verfügung zu stellen, das es ermöglicht, verschiedene übereinander gestapelte Materialbahnen in einem Fertigungsprozess zu handhaben.

Der gegenständliche Teil der zuvor genannten Aufgabe wird mit einer Vorrichtung gemäß den Merkmalen des Patentanspruchs 1 gelöst.

Der verfahrenstechnische Teil der zuvor genannten Aufgabe wird mit einem Verfahren gemäß den Merkmalen des Patentanspruchs 12 gelöst.

Vorteilhafte Ausführungsvarianten ergeben sich aus den abhängigen Patentansprüchen.

Die erfindungsgemäße Anordnung zum Greifen von flächigen Materialbahnen, insbesondere Faserwerkstoffbahnen mit einer Vorrichtung, welche ein Trägergestell und zumindest eine an einem Tragarm des Trägergestells angeordnete Greifeinheit aufweist, wobei die Greifeinheit eine Basisplatte, einen schwenkbar an der Basisplatte angeordneten Greifarm und einen Elektromagneten aufweist und eine Schließstellung der Greifeinheit durch eine von dem Elektromagneten erzeugte Magnetkraft arretierbar ist, ist erfindungsgemäß dadurch gekennzeichnet, dass eine Absenkbewegung der Greifeinheit durch eine Relativbewegung einer an einem freien Ende des Greifarms angeordneten Führungsfläche mit einer Abstützfläche in eine Schließbewegung des Greifarms überführbar ist, wodurch der Greifarm in eine Greifposition bringbar ist, wobei eine mit dem Greifarm zusammenwirkende Gegenlagerfläche an einem versetzt zum Elektromagneten angeordneten Auflagersockel angeordnet ist und der Auflagersockel ein Verstellmittel zur Lageorientierung der Gegenlagerfläche aufweist.

Durch ein Absenken des erfindungsgemäßen Trägergestells mit der an diesem befestigten Greifeinheit, wird die Greifeinheit bei Berühren der Abstützfläche durch die Führungsfläche, beispielsweise in Form einer abgerundeten Kante, am vorderen Ende geschlossen und die aufzunehmende Materialbahn im vorderen abgesenkten Teil aufgenommen. Bei der Abstützfläche kann es sich dabei um eine Oberfläche handeln, auf der die aufzunehmenden Materialbahn oder die aufzunehmenden Materialbahnen liegen, eine Form, in der die Materialbahnen liegen oder aber eine Hilfsfläche, die beispielsweise durch ein Abstützkonstrukt an einem Materialbahnstapel angeordnet ist, handeln.

Durch das Berühren der Führungsfläche der Greifeinheit, erfährt der Greifarm eine Relativbewegung zwischen Führungsfläche und Abstützfläche. Diese Relativbewegung kommt zu Stande aus der Absenkbewegung des Trägergestells und wird in eine Schließbewegung des Greifarms transformiert. Hierbei wird der Greifarm seitlich unter die aufzunehmende Materialbahn verfahren und gleichzeitig in eine Greifposition gebracht. Die Greifposition ist eine Position zwischen einer Offenstellung und einer Geschlossenstellung des Greifarms.

Nach vollständigem Absenken des Trägergestells ist die Position des Greifarms durch Einschalten des Elektromagneten arretierbar. Hierdurch ist die Materialbahn gegriffen und in der Greifeinheit fixiert. Besonders vorteilig bei der erfindungsgemäßen Vorrichtung ist, dass die Greifeinheit unabhängig von dem zu greifenden Werkstoff der Materialbahn einsetzbar ist. Auch ist es vorstellbar eine mit Bindemittel getränkte Materialbahn mit der erfindungsgemäßen Vorrichtung zu greifen.

In einer weiteren bevorzugten Ausführungsform ist durch Aktivierung des Elektromagneten der Greifarm in die Schließstellung schwenkbar. Durch die zuvor beschriebene Bewegbarkeit des Greifarms in eine Greifposition kann es beispielsweise notwendig sein, den Greifarm noch weiter zu schwenken, um eine Schließstellung einzunehmen. Durch Einschalten des Elektromagneten ist es daher möglich, den Greifarm in die endgültige Schließstellung zum Greifen der Materialbahn zu schwenken. Auch ist es im Rahmen der Erfindung hier vorstellbar, durch Ändern der Wirkrichtung des Elektromagneten beim Lösen des Greifarms den Greifarm mit dem Elektromagneten abzustoßen. Hierdurch wird der Greifarm in die Offenstellung zurück geschwenkt. In diesem Fall ist der Greifarm zumindest teilweise aus einem magnetischen Material ausgeführt oder dem Greifarm ist ein magnetischer Gegenpol zugeordnet, so dass der Greifarm durch magnetische Abstoßung geöffnet werden kann.

Vorzugsweise weisen in einer Offenstellung der Greifeinheit der Greifarm und eine an der Greifeinheit angeordnete Gegenlagerfläche des Greifarms einen Winkel zwischen 20 und 90 Grad, vorzugsweise zwischen 40 und 80 Grad zu einander auf. Durch den Winkel des Greifarms der Greifeinheit in der Offenstellung ist es möglich, durch eine Absenkbewegung der Vorrichtung ein seitliches Untergreifen der Materialbahn durch den Greifarm sicherzustellen. Besonders bevorzugt ist dazu der Winkel kleiner als 90 Grad zu wählen, so dass durch ein Absenken automatisch eine Relativbewegung durch kinematische Folge bei Berühren der Führungsfläche und der Abstützfläche eintritt. Durch die Gravitationskraft senkt sich die Vorrichtung weiter ab und fährt dabei durch kinematische Koppelung von Führungsfläche und Abstützfläche den Greifarm unter die Materialbahn. Die kinematische Wirkreihenfolge ist vergleichbar mit dem Satz des Pythagoras.

In einer weiteren bevorzugten Ausführungsvariante ist der Winkel der Offenstellung durch ein Stellmittel einstellbar. Ein sich hierdurch ergebener Vorteil besteht darin, dass die Greifeinheit auf das zu greifende Material und auf die Anzahl der zu greifenden Materialbahnen abgestimmt werden kann. So ist es im Rahmen der Erfindung beispielsweise vorstellbar, dass ein in seiner Dicke großer Stapel von mehreren Materialbahnen eine große Greiffläche erfordert, so dass ein Winkel minimal kleiner 90 Grad eingestellt ist.

Eine dünne einzeln zu greifende Materialbahn kann folglich nur eine geringe Greiffläche erfordern, die mit einem Winkel von beispielsweise 45 Grad realisiert werden kann. In der Folge des kleineren einzustellenden Winkels des Greifarms in der Offenstellung fährt bei einem Absenken der Greifarm gemäß Satz des Pythagoras auch nur in geringer Weise unter die Materialbahn, so dass hier eine kleinere Greiffläche zu Stande kommt, gegenüber einem Winkel der minimal kleiner 90 Grad eingestellt ist.

In einer weiteren bevorzugten Ausführungsform ist die Haltekraft der Greifeinheit durch die Magnetkraft des Elektromagneten regelbar. Der Elektromagnet zieht durch Beaufschlagen mit elektrischem Strom den Greifarm zu sich. Hierdurch wird auf ein zwischen dem Greifarm und der Gegenlagerfläche eingeklemmtes Material, beispielsweise in Form einer Materialbahn, ein Druck ausgeübt. Die Intensität der Flächenpressung ist dabei durch die Stärke der magnetischen Anziehung, hervorgerufen durch den Elektromagneten, einstellbar. Dies wirkt sich besonders vorteilig bei verschiedenen Werkstoffarten von zu greifenden Materialbahnen aus.

Eine leichte Materialbahn, beispielsweise in Form einer wenige Mikrometer dicken Folie, benötigt nur eine geringere Haltekraft, eine schwere Materialbahn in Form eines GFK-Gewebes benötigt hingegen eine sehr hohe Haltekraft. Auch durch Einstellung der Haltekraft kann beispielsweise so im Rahmen der Erfindung das Aufnehmen mehrere Materialbahnen mit einer Dicke von mehreren Millimetern realisiert werden.

Vorzugsweise weist der Greifarm von seinem freien Ende zu der Schwenkachse verlaufend zwei Längenabschnitte auf, wobei die Längenabschnitte in Relation zueinander unterschiedliche Dicken besitzen. Durch die unterschiedlichen Längenabschnitte ergibt sich bei dem Längenabschnitt an dem freien Ende eine Greiffläche. Dieser Längenabschnitt ist im Rahmen der Erfindung beispielsweise dadurch gekennzeichnet, dass er eine flächige Ausnehmung aufweist. Der Greifabschnitt ist somit dünner als der zweite Längenabschnitt, der im Bereich der Schwenkachse liegt.

Die Längenabschnitte weisen somit einen Versatz zueinander auf. Dies kann sich im Rahmen der Erfindung beispielsweise vorteilhaft zum Greifen von mehreren Materialbahnen auswirken. Weiterhin ist im Rahmen der Erfindung unter zwei unterschiedlichen Längenabschnitten auch vorstellbar, dass der Längenabschnitt am freien Ende eine Beschichtung aufweist und somit dicker ausgebildet ist als der Längenabschnitt an der Schwenkachse. Hierdurch ergibt sich wiederum der Vorteil, dass die Greiffläche im Bereich der Beschichtung besonders vorteilig zum Greifen von verschiedenen Materialbahnen ausgebildet ist.

In einer weiteren bevorzugten Ausführungsvariante weist die Greiffläche und/oder Gegenlagerfläche eine auf die zu greifende Materialbahn abgestimmte Oberflächenrauhigkeit auf. Hierunter ist im Rahmen der Erfindung zu verstehen, dass beispielsweise eine Folie eine tendenziell eher spiegelglatte Oberflächenrauhigkeit zum Greifen erfordert, wohingegen eine Glasfaserbahn eine tendenziell eher raue Oberfläche zum Greifen erfordert. Im Rahmen der Erfindung sind die Oberflächenrauhigkeiten von Greiffläche und/oder Gegenlagerfläche unter Berücksichtigung des zu greifenden Werkstoffs zu wählen.

In einer weiteren bevorzugten Ausführungsvariante ist die Greiffläche an einem Wechselkörper vorgesehen, wobei der Wechselkörper an dem Greifarm lösbar anordnenbar ist. Unter einem Wechselkörper ist im Rahmen der Erfindung eine auswechselbare Greifbacke oder aber auch Spannbacke zu verstehen, die am Greifarm anordnenbar ist. Die Anordnung kann im Rahmen der Erfindung durch Formschluss und/oder Stoffschluss und/oder Kraftschluss erfolgen. Hierdurch ergibt sich der Vorteil, dass die Greifeinheit zum Greifen von in den Materialeigenschaften verschiedenen Werkstoffen universal nutzbar ist. Es muss nicht die komplette Greifeinheit ausgewechselt werden, sondern es reicht ein einfaches Austauschen des Wechselkörpers.

Für die Praxis vorteilhaft ist der Greifarm im Bereich des Gelenks an der Basisplatte schwimmend gelagert. Hierzu kann der Greifarm im Gelenk geführt vertikal verlagerbar und/oder an der Basisplatte nachgiebig abgestützt sein. Diese Maßnahme bewirkt, dass sich der Greifarm mit seiner Greiffläche in der Schließlage innerhalb vorbestimmter Grenzen in unterschiedlichen Parallellagen zur Gegenlagerfläche der Greifeinheit und somit auf unterschiedliche Dicken der Materialbahnen einstellen kann, wodurch eine selbsttätige Anpassung der Greifspaltdicke während des Greifvorgangs erfolgt. Das Ausgleichsmittel im Gelenkbereich zwischen Basisplatte und Greifer ermöglicht im Rahmen der Erfindung eine Kompensierung der sich einstellenden Keilform zwischen Greifarm und Gegenlagerfläche beim Greifen der Materialbahn. Diese Keilform entsteht, wenn die Greiffläche ohne zu greifende Materialbahn flächig auf der Gegenlagerfläche zum Anliegen kommt. Liegt nun eine Materialbahn zwischen Greiffläche und Gegenlagerfläche, so steht der Greifarm in einer Keilform zu der Gegenlagerfläche.

Beim Greifen von dicken Materialbahnen oder mehreren gestapelten Materialbahnen erfährt die Keilform einen immer größer werdenden Winkel, der sich schließlich nachteilig auf die Flächenpressung zwischen Greifarm und Gegenlagerfläche auswirkt. Durch das Ausgleichsmittel wird die Keilform vermieden, so dass nach Aktivierung des Elektromagneten die Greiffläche und die Gegenlagerfläche im Wesentlichen parallel mit den dazwischen befindlichen Materialbahnen zum Anliegen kommen. Die Flächenpressung ist somit im jeden Bereich der Greiffläche im Wesentlichen gleich groß.

In einer weiteren bevorzugten Ausführungsform ist ein Stellmittel, vorzugsweise federelastisch, zwischen der Basisplatte und dem Greifarm zur Rückführung des Greifarms aus der Schließstellung in die Offenstellung vorgesehen. Wird die Greifeinheit ohne dazwischenliegende Materialbahn betätigt, so ist es im Rahmen der Erfindung vorstellbar, dass der Greifarm so stark magnetisiert wird, dass er nicht durch die Gravitationskraft alleine wieder in seine Offenstellung zurückgelangt.

Ein weiterer Vorteil ist, dass sichergestellt wird, dass der Greifarm zur Freigabe der gegriffenen Materialbahn immer öffnet. Durch das Stellmittel wird sichergestellt, dass der Greifarm immer wieder alleine in seine Offenstellung geführt wird, unabhängig von der Intensität und der Dauer der Magnetisierung durch den Elektromagneten.

In einer weiteren vorteilhaften Ausführungsvariante besteht die Vorrichtung aus mehreren Greifeinheiten mit jeweils einem Elektromagneten, wobei die Elektromagneten separat und/oder gemeinsam ansteuerbar sind. Die Ansteuerung des Elektromagneten bzw. der Elektromagneten erfolgt im Rahmen der Erfindung über eine Steuereinheit, die zentral an der Vorrichtung angeordnet ist. Sind mehrere Elektromagneten anzusteuern, so kann es unter Umständen erforderlich sein, zunächst zwei Elektromagneten auf einer zuerst greifenden Seite und zeitlich versetzt dazu zwei Elektromagneten auf einer anderen zu greifenden Seite anzusteuern.

Ein weiterer sich ergebener Vorteil ist, dass die Magneten einzeln in ihrer Intensität ansteuerbar sind. So ist es auch hier beispielsweise vorstellbar, dass zwar zunächst alle Elektromagneten aktiviert werden, aber einzelne Elektromagneten unterschiedliche Intensitäten bezüglich der zu erzeugenden Flächenpressung erfordern. All dies ist im Rahmen der Erfindung durch eine zentrale Steuereinheit, die die Magneten einzeln und/oder gemeinsam ansteuern und regeln kann, realisierbar.

Erfindungsgemäß ist eine mit dem Greifarm zusammenwirkende Gegenlagerfläche an einem Auflagersockel angeordnet. Der Auflagersockel ist versetzt zum Elektromagneten, insbesondere axial bzw. mit Abstand parallel neben dem Elektromagneten angeordnet. Zwischen der Greiffläche des Greifarms und der Gegenlagerfläche wird eine Materialbahn aufgenommen und eingespannt.

Zur Einstellung eines Greifspalts ist des Weiteren vorgesehen, dass der Auflagersockel ein Verstellmittel aufweist, mittels dessen eine Lageorientierung der Gegenlagerfläche erfolgen kann. Ein solches Verstellmittel kann beispielsweise in Form einer Gewindespindel realisiert sein.

Der verfahrenstechnische Anteil der erfindungsgemäßen Aufgabe wird mit einem Verfahren zum Handhaben von Materialbahnen, insbesondere Faserwerkstoffbahnen, mit einer Vorrichtung nach einem der Ansprüche 1 bis 11, mit folgenden Verfahrensschritten:
- Positionieren der Vorrichtung über der Materialbahn,
- Absenken der Vorrichtung,
- Schließen des Greifarms durch Relativbewegung der Führungsfläche zu einer darunter liegenden Abstützfläche,
- Aktivieren des Elektromagneten,
- Anheben der Materialbahn,
gelöst.

Besonders vorteilig hierbei ist, dass durch die Relativbewegung der Führungsfläche zu einer darunterliegenden Abstützfläche der Greifarm unter die zu greifende Materialbahn geführt wird. Mit dem erfindungsgemäßen Verfahren ist es möglich, Materialbahnen verschiedenster Werkstoffarten in verschiedensten Werkstoffzuständen zu greifen. So ist es beispielsweise vorstellbar, weiche Materialbahnen oder aber auch harte Materialbahnen zu greifen sowie trockene und/oder feuchte Materialbahnen. Unter eine feuchte Materialbahn ist im Rahmen der Erfindung eine Materialbahn zu verstehen, die mit einem Bindemittel getränkt ist.

In einer weiteren vorteilhaften Ausführungsvariante des erfindungsgemäßen Verfahrens wird die Anzugskraft des Elektromagneten in Abhängigkeit von der Materialbahndicke und/oder des Materialbahnwerkstoffs gesteuert. Hierdurch ergibt sich der Vorteil, dass im Rahmen der Erfindung verschiedenste Werkstoffarten mit einem erfindungsgemäßen Verfahren gehandhabt werden können. So ist es im Rahmen der Erfindung möglich, Werkstoffarten, die zum Greifen eine hohe Flächenpressung benötigen zu handhaben oder aber auch mit einer gleichen Vorrichtung in demselben Verfahren Werkstoffarten, die eine niedrige Flächenpressung zum Greifen benötigen, zu handhaben.

Auch können mit dem erfindungsgemäßen Verfahren wahlweise eine dünne Materialbahn, mehrere dünne Materialbahnen, Materialbahnen verschiedener Dicken oder aber auch mehrere dicke Materialbahnen gehandhabt werden. Die variable Anzugskraft des Elektromagneten, in Abhängigkeit von der Materialbahndicke, wird dabei im Rahmen der Erfindung zunächst vorher eingestellt. Es ist aber auch vorstellbar, das Handhabungsverfahren vollautomatisch erfolgen zu lassen.

Eine Einstellung der zu wählenden Anzugskraft durch den Elektromagneten erfolgt dabei in einer Kombination aus Sensorik und Aktuatorik. So ist es beispielsweise vorstellbar, dass verschiedene Sensoren die Materialbahndicke und den Werkstoff erfassen und daraufhin eine Steuereinheit die Anzugskraft des Elektromagneten einstellt. Auch ist es vorstellbar, dass ein Durchhängen der zu greifenden Materialbahn in der Mitte durch einen Sensor erfasst wird und in Folge dessen eine Anzugskraft des Elektromagneten gewählt wird.

In einer besonders bevorzugten Ausführungsform wird der Greifarm während der Relativbewegung unter die zu greifende Materialbahn geschoben. Hierdurch ergibt sich der Vorteil, dass Materialbahnen, beispielsweise Textilgewebe oder aber Gewebebahnen, auch mit unbeständigen Randbereichen gegriffen werden können. Diese unbeständigen Randbereiche können beispielsweise in Form von ausgefransten Randbereichen existieren.

Vorzugsweise wird die Zeit zum Schließen des Greifarms von der Offenstellung zu der Schließstellung in unter 5 Sekunden ausgeführt, insbesondere unter 2 Sekunden, bevorzugt unter 1 Sekunde. Hierdurch ist es im Rahmen der Erfindung möglich, ein Verfahren zum Handhaben von Materialbahnen zur Verfügung zu stellen, das in mechanisierte oder vollautomatisierte Produktionsprozesse mit hohen Taktzeiten integriert werden kann.

Gerade der Greifvorgang kann mit dem erfindungsgemäßen Verfahren besonders prozesssicher ausgeführt werden, so dass ein Fehlgreifen weitestgehend ausgeschlossen ist. Auch ein Ab- oder Ausreißen der zu greifenden Stellen wird mit dem erfindungsgemäßen Verfahren möglichst ausgeschlossen. In Kombination mit einer kurzen Greifzeit kann das erfindungsgemäße Verfahren zum Handhaben von Materialbahnen somit besonders vorteilig in mechanisierte oder automatisierte Produktionsprozesse integriert werden.

In einer weiteren bevorzugten Ausführungsvariante wird zwischen der Greiffläche und der Gegenlagerfläche eine kraftschlüssige und/oder reibschlüssige Verbindung mit der Materialbahn hergestellt. Hierdurch ergibt sich der Vorteil, dass die zu greifende Materialbahn mit hoher Genauigkeit prozesssicher gegriffen wird.

In einer weiteren besonders bevorzugten Ausführungsvariante der vorliegenden Erfindung wird die gegriffene Materialbahn über einer Form abgesenkt. Unter einer Form ist hier beispielsweise eine Positivform zur Formgebung von aus faserverstärkten Materialen herzustellenden Bauteilen zu verstehen. Die Materialbahn kann im Rahmen der Erfindung mit Bindemittel getränkt über der Form abgesenkt werden, so dass ein weiteres Laminieren oder aber Formgeben in einem Produktionsprozess von faserverstärkten Bauteilen automatisiert ablaufen kann.

Vorzugsweise wird in Abhängigkeit eines sich durch das Absenken über der Form einstellenden Spannungszustandes der Materialbahn während des Formvorgangs die Haltekraft des Elektromagneten gesteuert. Durch Absenken der Materialbahn über einer Positivform ergibt sich ein Spannungszustand der Materialbahn, wenn eine Mitte der Materialbahn durch Absenken über der Positivform gestreckt wird. Dieser Spannungszustand kann es erfordern, dass die gegriffenen Endbereiche entspannt werden. Dieses Entspannen ist beispielsweise dadurch realisierbar, dass die zu greifende Materialbahn langsam und kontrolliert aus der Greifposition herausgezogen wird. Durch Verringern der Haltekraft wird dieses langsame Herausziehen aus der Greifposition ermöglicht.

Weiter Vorteile, Merkmale, Eigenschaften und Aspekte der vorliegenden Erfindung ergeben sich aus der folgenden Beschreibung, bevorzugte Ausführungsformen anhand der schematischen Zeichnungen. Diese dienen dem einfachen Verständnis der Erfindung. Es zeigen:
- Figur 1: eine perspektivische Ansicht einer erfindungsgemäßen Greifeinheit;
- Figur 2: eine erfindungsgemäße Greifeinheit in einer Seitenansicht, wobei sich die Greifeinheit in einer Offenstellung befindet;
- Figur 3: die erfindungsgemäße Greifeinheit in einer Seitenansicht;
- Figur 4: die erfindungsgemäße Greifeinheit in einer Schließstellung;
- Figur 5: eine erfindungsgemäße Vorrichtung zum Greifen von Materialbahnen mit vier Tragarmen;
- Figur 6: eine zweite Ausführungsform einer Greifeinheit in einer Seitenansicht und
- Figur 7: eine dritte Ausführungsform einer Greifeinheit in einer Seitenansicht.

In den Figuren werden für gleiche oder ähnliche Teile dieselben Bezugszeichen verwendet, wobei entsprechende oder vergleichbare Vorteile erreicht werden, auch wenn eine wiederholte Beschreibung aus Vereinfachungsgründen entfällt.

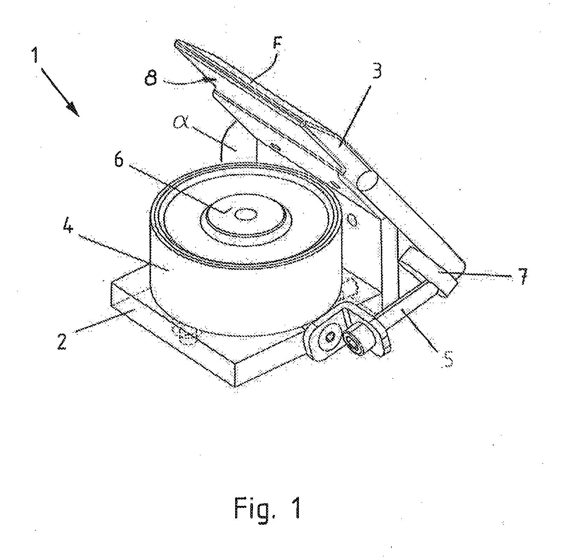

Figur 1 zeigt eine perspektivische Ansicht einer erfindungsgemäßen Greifeinheit 1. Die Greifeinheit 1 weist eine Basisplatte 2, einen schwenkbar an der Basisplatte 2 angeordneten Greifarm 3 sowie einen auf der Basisplatte 2 angeordneten Elektromagneten 4 auf. Weiterhin weist die Basisplatte 2 ein Stellmittel 5 in Form einer hier gezeigten Einstellschraube auf. Das Stellmittel 5 dient zur Einstellung eines Winkels α der Offenstellung zwischen dem Greifarm 3 und einer Gegenlagerfläche 6. Das Stellmittel 5 kommt an dem Greifarm 3 an einem an dem Greifarm 3 befestigten Anschlag 7 zur Anlage.

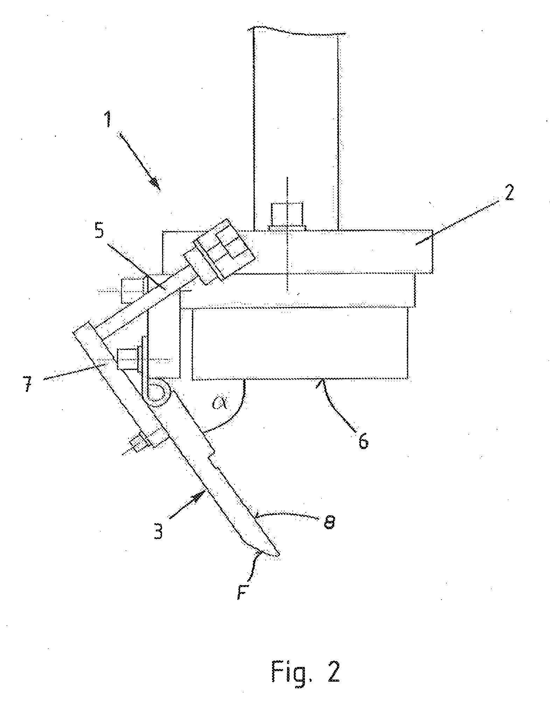

Figur 2 zeigt eine erfindungsgemäße Greifeinheit 1 in einer Seitenansicht, wobei sich die Greifeinheit 1 in einer Offenstellung befindet. Der Anschlag 7 des Greifarms 3 kommt mit einem Stellmittel 5 in Kontakt, so dass ein Winkel α der Offenstellung zwischen dem Greifarm 3 und der Gegenlagerfläche 6 ausgebildet ist. Durch Einstellung über das Stellmittel 5, hier dargestellt als Stellschraube, ist der Winkel α in seiner Größe einstellbar. Auf dem Elektromagneten 4 abgewandte Seite des Greifarms befindet sich die Führungsfläche F.

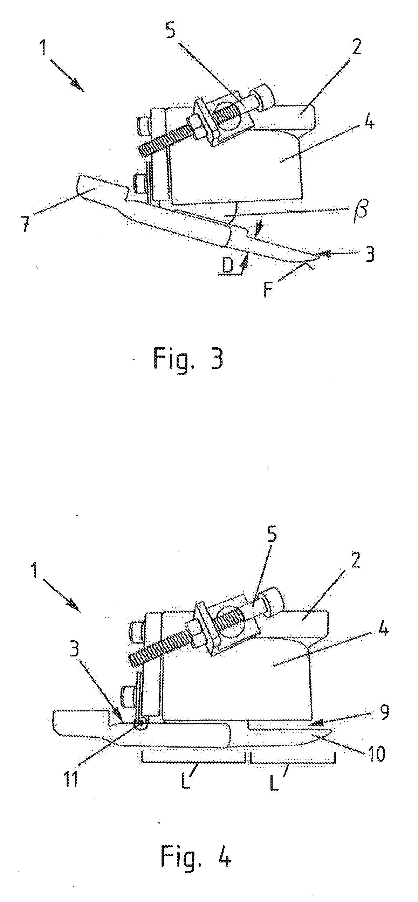

Figur 3 zeigt die erfindungsgemäße Greifeinheit 1 in einer Seitenansicht in einer Greifposition. Hier ist zu erkennen, dass das Stellmittel 5 in Form der Einstellschraube an der Basisplatte 2 angeordnet ist. Durch einstellen des Stellmittels 5 kommt wiederum der Greifarm 3 mit einem Anschlag 7 in einem Winkel α zum Anlegen, so dass sich der Winkel α in einer hier nicht dargestellten Offenstellung zwischen dem Greifarm 3 und der Gegenlagerfläche 6 einstellt. Der Greifarm 3 ist hier in einer Greifposition gezeigt. Die hier gezeigte Greifposition weist wiederum einen Winkel β zwischen Greifarm 3 und Gegenlagerfläche 6 auf.

Figur 4 zeigt die erfindungsgemäße Greifeinheit 1 in einer Schließstellung. Während der Schließstellung kommt der Greifarm 3 im Wesentlichen parallel zur Anlage an der Gegenlagerfläche 6. Im Falle des Vorhandenseins einer hier nicht dargestellten Materialbahn liegt die Materialbahn zwischen einer Greiffläche 8 des Greifarms 3 und der Gegenlagerfläche 6. Der Greifarm 3 kann weiterhin eine hier dargestellte Ausnehmung 9 aufweisen, so dass in der Schließstellung, bei Vorhandensein einer hier nicht dargestellten Materialbahn, der Greifarm 3 und die Gegenlagerfläche 6 im Wesentlichen parallel zur Anlage kommen und auf die hier nicht dargestellte Materialbahn eine Flächenpressung ausüben.

Zur Überführung von der in Figur 3 dargestellten Greifposition in die Schließstellung wurde hier der Elektromagnet 4 aktiviert, so dass ein Anziehen des Greifarms 3 vollzogen wurde. Weiterhin ist erkennbar, dass der Greifarm 3 zwei verschiedene Längenabschnitt L aufweist. Die Längenabschnitte L haben jeweils eine voneinander unterschiedliche Dicke D. Der Längenabschnitt L am freien Ende 10 weist eine geringere Dicke D auf als der Längenabschnitt L des Greifarms 3 auf der Seite der Schwenkachse 11.

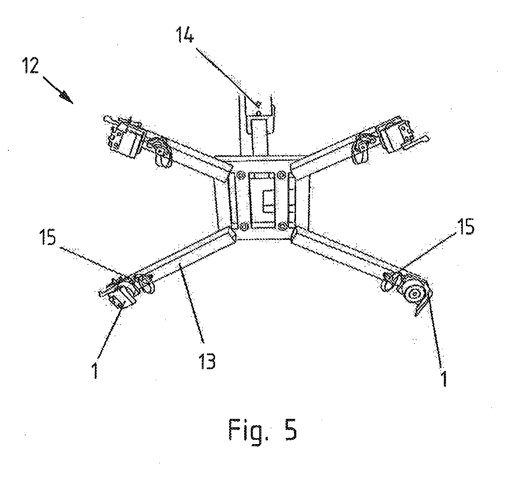

Figur 5 zeigt eine erfindungsgemäße Vorrichtung 12 zum Greifen von Materialbahnen mit vier Tragarmen 13, wobei an jedem Ende eines Tragarms 13 eine erfindungsgemäße Greifeinheit 1 angeordnet ist. Weiterhin weist die in Figur 4 gezeigte Vorrichtung 12 eine zentrale Steuereinheit 14 zum Ansteuern einer jeder Greifeinheit 1 auf. Ebenfalls dargestellt in Figur 4 sind Sensoren 15, die einen vollautomatischen Betrieb der erfindungsgemäßen Vorrichtung 12 ermöglichen.

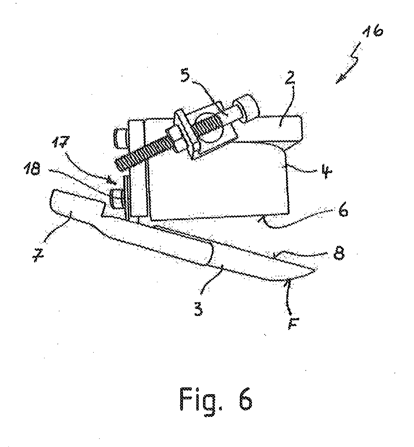

Die Figur 6 zeigt eine Ausführungsform einer Greifeinheit 16, die vom grundsätzlichen Aufbau der Greifeinheit 1 wie anhand der Figur 3 erläutert entspricht. Demzufolge sind einander entsprechende Bauteile bzw. Bauteilkomponente mit den gleichen Bezugszeichen versehen. Bei der Greifeinheit 16 ist der Greifarm 3 bzw. die Greiffläche 8 durchgehend ohne Ausnehmung 9 ausgeführt.

Der Greifarm 3 - ist schwimmend an der Basisplatte 2 - gelagert. Hierzu ist das Gelenk 17 mit einer Linearführung 18 versehen, so dass sich der Greifarm 3 mit seiner Greiffläche 8 innerhalb vorbestimmter Grenzen in unterschiedlichen Parallellagen zur Gegenlagerfläche 6 einstellen kann. Hierdurch ist eine selbsttätige Anpassung der Greifspaltdicke während des Greifvorgangs möglich, so dass auch unterschiedliche Dicken an Materialbahnen gegriffen werden können.

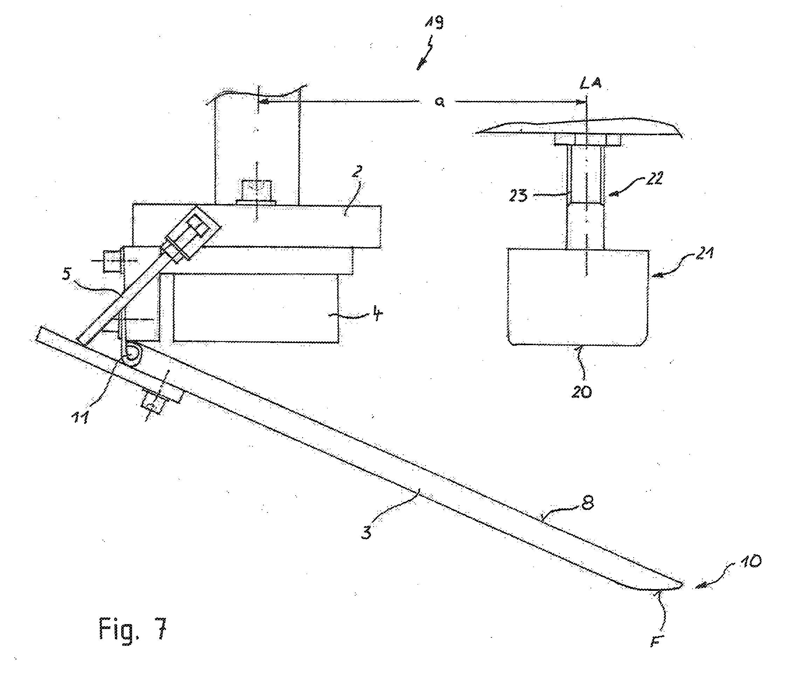

Bei der Ausführungsform der Greifeinheit 19 gemäß der Darstellung von Figur 7 sind wiederum einander entsprechende Bauteile und Bauteilkomponenten mit den gleichen Bezugszeichen versehen. Auf eine nochmalige Erläuterung der grundsätzlichen Funktionsweise wird verzichtet. Diese entspricht der zuvor beschriebenen.

Bei der Greifeinheit 19 ist die Gegenlagerfläche 20 an einem parallel mit Abstand a versetzt zum Elektromagneten 4 angeordneten Auflagersockel 21 angeordnet. Der Auflagersockel 21 ist mittels eines Verstellmittels 22 in der Höhe, vorliegend longitudinal zu seiner der Längsachse LA, einstellbar. Das Verstellmittel 22 ist in Form einer Gewindespindel 23 ausgeführt. Durch Verstellen der Höhe des Auflagersockels 21 kann der Greifspalt zwischen dem Greifarm 3 bzw. der Greiffläche 8 und der Gegenlagerfläche 20 auf verschiedene Materialdicken eingestellt werden.

### Bezugszeichen:

- 1: - Greifeinheit
- 2: - Basisplatte
- 3: - Greifarm
- 4: - Elektromagnet
- 5: - Stellmittel
- 6: - Gegenlagerfläche
- 7: - Anschlag
- 8: - Greiffläche
- 9: - Ausnehmung
- 10: - freies Ende zu 3
- 11: - Schwenkachse
- 12: - Vorrichtung
- 13: - Tragarm
- 14: - Steuereinheit
- 15: - Sensor
- 16: - Greifeinheit
- 17: - Gelenk
- 18: - Unearführung
- 19: - Greifeinheit
- 20: - Gegenlagerfläche
- 21: - Auflagersockel
- 22: - Verstellmittel
- 23: - Gewindespindel

- LA: - Längsachse von 21
- L: - Längenabschnitt
- D: - Dicke
- F: - Führungsfläche

- a: - Abstand
- α: - Winkel Offenstellung
- β: - Winkel Greifposition

## Patentansprüche

1. Anordnung zum Greifen von flächigen Materialbahnen, insbesondere Faserwerkstoffbahnen mit einer Abstützfläche, auf der die Materialbahn liegen kann, und einer Vorrichtung (12), welche ein Trägergestell und zumindest eine an einem Tragarm (13) des Trägergestells angeordnete Greifeinheit (1; 16; 19) aufweist, wobei die Greifeinheit (1; 16; 19) eine Basisplatte (2), einen schwenkbar an der Basisplatte (2) angeordneten Greifarm (3) und einen Elektromagneten (4) aufweist und eine Schließstellung der Greifeinheit (1; 16; 19) durch eine von dem Elektromagneten (4) erzeugte Magnetkraft arretierbar ist, **dadurch gekennzeichnet, dass** eine Absenkbewegung der Greifeinheit (1; 16; 19) durch eine Relativbewegung einer an einem freien Ende (10) des Greifarms (3) angeordneten Führungsfläche (F) mit der Abstützfläche in eine Schließbewegung des Greifarms (3) überführbar ist, wodurch der Greifarm (3) in eine Greifposition bringbar ist, wobei eine mit dem Greifarm (3) zusammenwirkende Gegenlagerfläche (20) an einem versetzt zum Elektromagneten (4) angeordneten Auflagersockel (21) angeordnet ist und der Auflagersockel (21) ein Verstellmittel (22) zur Lageorientierung der Gegenlagerfläche (20) aufweist.

2. Anordnung nach Anspruch 1, **dadurch gekennzeichnet, dass** durch Aktivierung des Elektromagneten (4) der Greifarm (3) in die Schließstellung schwenkbar ist.

3. Anordnung nach Anspruch 1 oder 2, **dadurch gekennzeichnet, dass** in einer Offenstellung der Greifeinheit (1; 16; 19) der Greifarm (3) und eine an der Greifeinheit (1; 16; 19) angeordnete Gegenlagerfläche (6) einen Winkel (α) zwischen 20 und 90 Grad, vorzugsweise zwischen 40 und 80 Grad zueinander aufweisen.

4. Anordnung nach Anspruch 3, **dadurch gekennzeichnet, dass** der Winkel (α) der Offenstellung durch ein Stellmittel (5) einstellbar ist.

5. Anordnung nach einem der Ansprüche 3 oder 4, **dadurch gekennzeichnet, dass** die Offenstellung durch einen Anschlag (7) an dem Greifarm (3) begrenzbar ist.

6. Anordnung nach einem der Ansprüche 1 bis 5, **dadurch gekennzeichnet, dass** die Haltekraft der Greifeinheit (1; 16; 19) durch die Magnetkraft des Elektromagneten (4) regelbar ist.

7. Anordnung nach einem der Ansprüche 1 bis 6, **dadurch gekennzeichnet, dass** der Greifarm (3) von seinem freien Ende (10) zu der Schwenkachse (11) verlaufend zwei Längenabschnitte (L) aufweist, wobei die Längenabschnitte (L) in Relation zueinander unterschiedliche Dicken (D) besitzen.

8. Anordnung nach einem der Ansprüche 1 bis 7, **dadurch gekennzeichnet, dass** die Greiffläche (8) an einem Wechselkörper vorgesehen ist, wobei der Wechselkörper an dem Greifarm (3) lösbar angeordnet ist.

9. Anordnung nach einem der Ansprüche 1 bis 8, **dadurch gekennzeichnet, dass** der Greifarm (3) an der Basisplatte (2) schwimmend gelagert ist.

10. Anordnung nach einem der Ansprüche 1 bis 9, **dadurch gekennzeichnet, dass** ein Stellmittel (5), vorzugsweise federelastisch, zwischen der Basisplatte (2) und dem Greifarm (3) zur Rückführung des Greifarms (3) aus der Schließstellung in die Offenstellung vorgesehen ist.

11. Anordnung nach einem der Ansprüche 1 bis 10, **dadurch gekennzeichnet, dass** diese aus mehreren Greifeinheiten (1; 16; 19) mit jeweils einem Elektromagneten (4) besteht, wobei die Elektromagneten (4) separat und/oder gemeinsam ansteuerbar sind.

12. Verfahren zum Handhaben von Materialbahnen, insbesondere Faserwerkstoffbahnen, mit einer Vorrichtung (12) nach mindestens Anspruch 1, mit folgenden Verfahrensschritten:
- Positionieren der Vorrichtung (12) über der Materialbahn,
- Absenken der Vorrichtung (12),
- Schließen des Greifarms (3) durch Relativbewegung der Führungsfläche (F) zu einer darunter liegenden Abstützfläche,
- Aktivieren des Elektromagneten (4),
- Anheben der Materialbahn.

13. Verfahren nach Anspruch 12, **dadurch gekennzeichnet, dass** die Anzugkraft des Elektromagneten (4) in Abhängigkeit von der Materialbahndicke und/oder des Materialbahnwerkstoffes gesteuert wird.

14. Verfahren nach Anspruch 12 oder 13, **dadurch gekennzeichnet, dass** der Greifarm (3) während der Relativbewegung unter die zu greifende Materialbahn geschoben wird.

15. Verfahren nach einem der Ansprüche 12 bis 14, **dadurch gekennzeichnet, dass** die Zeit zum Schließen des Greifarms (3) von der Offenstellung zu der Schließstellung unter 5 Sekunden, insbesondere unter 2 Sekunden, bevorzugt unter 1 Sekunde ausgeführt wird.

16. Verfahren nach einem der Ansprüche 12 bis 15 **dadurch gekennzeichnet, dass** zwischen der Greiffläche (8) und der Gegenlagerfläche (6) eine kraftschlüssige und/oder reibschlüssige Verbindung mit der Materialbahn hergestellt wird.

17. Verfahren nach einem der Ansprüche 12 bis 16 **dadurch gekennzeichnet, dass** die gegriffene Materialbahn über einer Form abgesenkt wird.

18. Verfahren nach einem der Ansprüche 12 bis 17, **dadurch gekennzeichnet, dass** in Abhängigkeit eines sich durch Absenken über der Form einstellenden Spannungszustandes der Materialbahn während des Formvorgangs die Haltekraft des Elektromagneten (4) gesteuert wird.

## Claims

1. Arrangement for gripping planar material webs, in particular fibre material webs having a support face on which the material web may be located, and a device (12) which has a carrier frame and at least one gripper unit (1; 16; 19) which is arranged on a carrier arm (13) of the carrier frame, the gripper unit (1; 16; 19) having a base plate (2), a gripper arm (3), which is pivotably arranged on the base plate (2), and a solenoid (4), and a closure position of the gripper unit (1; 16; 19) being able to be secured by means of a magnetic force produced by the solenoid (4), **characterised in that** a lowering movement of the gripper unit (1; 16; 19) can be changed by means of a relative movement of a guiding face (F) which has the support face and which is arranged at a free end (10) of the gripper arm (3) into a closure movement of the gripper arm (3), whereby the gripper arm (3) can be moved into a gripping position, a counter-bearing face (20) which cooperates with the gripper arm (3) being arranged on a support base (21), which is arranged so as to be offset relative to the solenoid (4), and the support base (21) having an adjustment means (22) for positional orientation of the counter-bearing face (20).

2. Arrangement according to claim 1, **characterised in that** the gripper arm (3) can be pivoted into the closure position by actuating the solenoid (4).

3. Arrangement according to claim 1 or claim 2, **characterised in that**, in an open position of the gripper unit (1; 16; 19), the gripper arm (3) and a counter-bearing face (6) which is arranged on the gripper unit (1; 16; 19) have an angle (α) between 20 and 90 degrees, preferably between 40 and 80 degrees, relative to each other.

4. Arrangement according to claim 3, **characterised in that** the angle (α) of the open position can be adjusted by a positioning means.

5. Arrangement according to either claim 3 or claim 4, **characterised in that** the open position can be delimited by means of a stop (7) on the gripper arm (3).

6. Arrangement according to any one of claims 1 to 5, **characterised in that** the retention force of the gripper unit (1; 16; 19) can be controlled by the magnetic force of the solenoid (4).

7. Arrangement according to any one of claims 1 to 6, **characterised in that** the gripper arm (3) has two longitudinal portions (L) extending from the free end (10) thereof to the pivot axis (11), the longitudinal portions (L) having different thicknesses (D) relative to each other.

8. Arrangement according to any one of claims 1 to 7, **characterised in that** the gripper face (8) is provided on a changing member, the changing member being releasably arranged on the gripper arm (3).

9. Arrangement according to any one of claims 1 to 8, **characterised in that** the gripper arm (3) is arranged on the base plate (2) in a floating manner.

10. Arrangement according to any one of claims 1 to 9, **characterised in that** a positioning means (5) which is preferably resilient is provided between the base plate (2) and the gripper arm (3) in order to return the gripper arm (3) from the closure position into the open position.

11. Arrangement according to any one of claims 1 to 10, **characterised in that** it comprises a plurality of gripper units (1; 16; 19) which each have a solenoid (4), the solenoids (4) being able to be controlled separately and/or together.

12. Method for handling material webs, in particular fibre material webs, having a device (12) according to at least claim 1, and having the following method steps:
- positioning the device (12) over the material web,
- lowering the device (12),
- closing the gripper arm (3) by means of relative movement of the guiding face (F) to form a support face which is located therebelow,
- activating the solenoid (4),
- lifting the material web.

13. Method according to claim 12, **characterised in that** the attraction force of the solenoid (4) is controlled in accordance with the material web thickness and/or the material web material.

14. Method according to claim 12 or claim 13, **characterised in that** the gripper arm (3) is pushed below the material web to be gripped during the relative movement.

15. Method according to any one of claims 12 to 14, **characterised in that** the time for closing the gripper arm (3) from the open position to the closed position is configured to be under 5 seconds, in particular under two seconds, preferably under 1 second.

16. Method according to any one of claims 12 to 15, **characterised in that** a non-positive locking and/or frictionally engaging connection with the material web is produced between the gripper face (8) and the counter-bearing face (6).

17. Method according to any one of claims 12 to 16, **characterised in that** the gripped material web is lowered over a mould.

18. Method according to any one of claims 12 to 17, **characterised in that** the retention force of the solenoid (4) is controlled during the moulding operation in accordance with a tensile state of the material web, which tensile state is adjusted by the lowering of the material web over the mould.

## Revendications

1. Aménagement de préhension de bandes de matériau plat, en particulier de bandes de matériau fibreux pourvues d'une face d'appui, sur laquelle la bande de matériau peut reposer, et comportant un dispositif (12), qui présente un bâti porteur et au moins une unité de préhension (1 ; 16 ; 19) aménagée sur un bras de support (13) du bâti porteur, dans lequel l'unité de préhension (1 ; 16 ; 19) comporte une plaque de base (2), un bras de préhension (3) monté à pivotement sur la plaque de base (2) et un électroaimant (4) et une position de fermeture de l'unité de préhension (1 ; 16 ; 19) peut être bloquée par une force magnétique produite par l'électroaimant (4), **caractérisé en ce qu'**un mouvement d'abaissement de l'unité de préhension (1 ; 16 ; 19) peut être converti par un mouvement relatif d'une surface de guidage (F) aménagée à une extrémité libre (10) du bras de préhension (3) avec une face d'appui en un mouvement de fermeture du bras de préhension (3), moyennant quoi le bras de préhension (3) peut être amené en position de préhension, dans lequel une face de butée (20) coopérant avec le bras de préhension (3) est aménagée sur un socle d'appui (21) agencé décalé par rapport à l'électroaimant (4) et le socle d'appui (21) présente un moyen de réglage (22) pour orienter en position la face de butée (20).

2. Aménagement selon la revendication 1, **caractérisé en ce que**, par activation de l'électroaimant (4), le bras de préhension (3) peut pivoter en position de fermeture.

3. Aménagement selon la revendication 1 ou la revendication 2, **caractérisé en ce que**, en position d'ouverture de l'unité de préhension (1 ; 16 ; 19), le bras de préhension (3) et une face de butée (6) aménagée sur l'unité de préhension (1 ; 16 ; 19) font un angle mutuel (α) entre 20 et 90 degrés, de préférence entre 40 et 80 degrés.

4. Aménagement selon la revendication 3, **caractérisé en ce que** l'angle (α) de la position d'ouverture peut être réglé par un moyen de commande (5).

5. Aménagement selon l'une quelconque des revendications 3 ou 4, **caractérisé en ce que** la position d'ouverture peut être délimitée par une butée (7) sur le bras de préhension (3).

6. Aménagement selon l'une quelconque des revendications 1 à 5, **caractérisé en ce que** la force de retenue de l'unité de préhension (1 ; 16 ; 19) peut être réglée par la force magnétique de l'électroaimant (4).

7. Aménagement selon l'une quelconque des revendications 1 à 6, **caractérisé en ce que** le bras de préhension (3) présente, s'étendant de son extrémité libre (10) à l'axe pivot (11), deux sections de longueur (L), dans lequel les sections de longueur (L) présentent des épaisseurs mutuelles différentes (D).

8. Aménagement selon l'une quelconque des revendications 1 à 7, **caractérisé en ce que** la face de préhension (8) est prévue sur un corps d'échange, dans lequel le corps d'échange est monté de manière amovible sur le bras de préhension (3).

9. Aménagement selon l'une quelconque des revendications 1 à 8, **caractérisé en ce que** le bras de préhension (3) est monté flottant sur la plaque de base (2).

10. Aménagement selon l'une quelconque des revendications 1 à 9, **caractérisé en ce qu'**un moyen de commande (5) est prévu de préférence sous l'effet élastique d'un ressort entre la plaque de base (2) et le bras de préhension (3) pour ramener le bras de préhension (3) de la position de fermeture dans la position d'ouverture.

11. Aménagement selon l'une quelconque des revendications 1 à 10, **caractérisé en ce qu'**il est constitué de plusieurs unités de préhension (1 ; 16 ; 19) avec respectivement un électroaimant (4), dans lequel les électroaimants (4) peuvent être commandés séparément et/ou conjointement.

12. Procédé de manipulation de bandes de matériau, en particulier de bandes de matériau fibreux, avec un dispositif (12) selon au moins la revendication 1, comprenant les étapes de procédé suivantes :
- positionnement du dispositif (12) au-dessus de la bande de matériau,
- abaissement du dispositif (12),
- fermeture du bras de préhension (3) par mouvement relatif de la surface de guidage (F) par rapport à une face d'appui se trouvant en dessous,
- activation de l'électroaimant (4), et
- relèvement de la bande de matériau.

13. Procédé selon la revendication 12, **caractérisé en ce que** la force d'attraction de l'électroaimant (4) est commandée en fonction de l'épaisseur de la bande de matériau et/ou du matériau formant la bande.

14. Procédé selon la revendication 12 ou la revendication 13, **caractérisé en ce que** le bras de préhension (3) est poussé en dessous de la bande de matériau à saisir au cours du mouvement relatif.

15. Procédé selon l'une quelconque des revendications 12 à 14, **caractérisé en ce que** le temps de fermeture du bras de préhension (3) de la position d'ouverture à la position de fermeture se situe en dessous de 5 secondes, en particulier en dessous de 2 secondes, de préférence en dessous de 1 seconde.

16. Procédé selon l'une quelconque des revendications 12 à 15, **caractérisé en ce qu'**une liaison par adhérence et/ou par frottement avec la bande de matériau est ménagée entre le face de préhension (8) et la face de butée (6).

17. Procédé selon l'une quelconque des revendications 12 à 16, **caractérisé en ce que** la bande de matériau saisie est abaissée sur un moule.

18. Procédé selon l'une quelconque des revendications 12 à 17, **caractérisé en ce que** la force de retenue de l'électroaimant (4) est commandée en fonction d'un état de tension se réglant par abaissement sur le moule au cours de l'opération de façonnage.
